# EUROPÄISCHE PATENTSCHRIFT

(11) **EP 2 423 111 B1**
(45) Veröffentlichungstag und Bekanntmachung des Hinweises auf die Patenterteilung: **22.05.2013**
(21) Anmeldenummer: 11176504.6
(22) Anmeldetag: 04.08.2011
(51) Int. Cl.: B65B 3/02, B29C 49/42, B65G 47/84, B67C 7/00

(54) **Vorrichtung und Verfahren zum Fördern von Vorformlingen**
Device and method for conveying preforms
Dispositif et procédé pour transporter des préformes

(30) Priorität: 25.08.2010 DE 102010035496
(43) Veröffentlichungstag der Anmeldung: 29.02.2012
(73) Patentinhaber: Krones AG, 93073 Neutraubling (DE)
(72) Erfinder: Forsthövel, Jochen, 93059 Regensburg (DE); Winzinger, Frank, 85354 Freising (DE)
(74) Vertreter: Hannke, Christian

(56) Entgegenhaltungen:
- WO-A2-01/44084
- DE-A1- 3 927 897
- DE-A1-102008 062 315
- FR-A1- 2 827 044
- US-B1- 6 811 390

## Beschreibung

Die vorliegende Erfindung ist auf eine Fördervorrichtung zum Fördern von Behältnissen, insbesondere Vorformlingen gemäß dem Oberbegriff des Patentanspruchs 1 und auf ein Verfahren zum Fördern von Vorformlingen gemäß dem Patentanspruch 15 gerichtet.

Bei Blasmaschinen gibt es des häufigeren Probleme, wenn erhitzte Vorformlinge von der Heizvorrichtung mittels eines Übergabesterns, in dem der Abstand des Vorformlings zueinander verändert wird, an das ebenfalls umlaufende Blasrad übergeben werden. Durch die Abstandsveränderung erfahren die Vorformlinge solche Beschleunigung, dass sich das weiche, erhitzte Material wegen der auf die Vorformlinge wirkenden Kräfte, insbesondere der Fliehkraft, umbiegt und die Vorformlinge daher als "Banane" in die Blasform eingesetzt werden. Somit ist bei der Längsreckung des Vorformlings durch die Reckstange nicht immer gewährleistet, dass die Reckstange zentrisch am Boden des Vorformlings diesen längs reckt. Es kommt zu sogenannten Offcentern. Das sind Flaschen, bei denen der Anspritzpunkt nicht in der Mitte der Flasche angeordnet ist, sondern seitlich. Dies hat negative Auswirkungen auf die Festigkeit des Bodens der Flasche, sodass diese z. B. je nach Winkellage unterschiedliche Wanddicken aufweisen können oder durch den Druck von CO₂-haltigen Getränken platzen können.

Auch in der Blasform ist der Vorformling einer Kraft, insbesondere der Fliehkraft, ausgesetzt, die ihn verbiegen kann. Die Öffnungsrichtung der Blasform ist bei Rundläuferblasmaschinen in der Regel nach außen, das heißt, dass bevorzugt die Achse, um die die Blasformhälften geöffnet werden, sowie die Preformlängsachse identisch mit der Drehachse der rundlaufenden Blasmaschine sind, hier treten durch die Drehung des Blaskarussells Fliehkräfte auf, denen beim Öffnen und Schließen der Blasform entgegengetreten werden muss.

Die Druckschriften US 4355968, DE 29708808 U1 und US 5116217 offenbaren jeweils einen Gegenstand, gemäß dem ein Vorformling aus einer vertikal orientierten Stellung in eine um 180° gedrehte vertikale Stellung bewegt wird. Dies erfolgt, um eine thermische Belastung des Gewindes des Vorformlings zu reduzieren. Es soll dadurch erreicht werden, dass die aufsteigende Hitze keine unerwünschte Erwärmung des Gewindeabschnitts bewirkt.

Die Druckschrift FR 2917290 offenbart eine Vorrichtung, gemäß der Vorformlinge, die mit einer Halteeinrichtung versehen sind, definiert rotiert werden können.

Es ist daher Aufgabe der vorliegenden Erfindung, eine Fördervorrichtung bereitzustellen, die geeignet ist, erhitzte Vorformlinge mit einer hohen Geschwindigkeit zu fördern und zu Flaschen zu blasen, ohne dass die Vorformlinge durch die Fliehkraft deformiert werden.

Die Aufgabe wird mittels einer Fördereinrichtung zum Fördern von Behältnissen, insbesondere Vorformlingen, bevorzugt im Bereich einer Blasmaschine gelöst, wobei denkbar ist, dass während dem Fördern von Vorformlingen, die beispielsweise Behältnisse in einem ersten Zustand darstellen, diese in Behältnisse in einem zweiten Zustand umgeformt werden. Die Vorformlinge sind dabei in einem deformierbaren Zustand (erhitzt und/oder sehr dünnwandig), d.h. bevorzugt quer zu ihrer Längsachse deformierbar, der Zustand, in dem die Vorformlinge nicht oder nur teilweise erhitzt sind, wird bevorzugt als nicht deformierbarer Zustand bezeichnet. Im Folgenden kann an Stelle des Begriffs Vorformling somit auch immer der Begriff Behältnis verwendet werden. Die Fördereinrichtung, bevorzugt im Bereich einer Blasmaschine, umfasst bevorzugt mindestens eine zumindest teilweise auf einer Bahn, wie z. B. einer abschnittsweisen geraden Bahn und insbesondere einer Kurvenbahn, bewegbare Transporteinheit zum Transportieren von mindestens einem Vorformling, welche Transporteinheit zumindest mittelbar mit einer Antriebseinheit verbunden ist, und die eine auf der Kurvenbahn bewegbare Transportkomponente, wie z. B. ein bewegtes Element der Fördervorrichtung, das bevorzugt auf einer definierten Bahn bewegbar ist und eine bevorzugt gegenüber dieser Transportkomponente bewegbare Aufnahmeeinrichtung, die z. B. als ein oder mehrere Teile einer Blasform ausgebildet sein kann und/ oder eine Einrichtung ist, die den Vorformling im Bereich eines Tragrings stützt, zum Aufnehmen von dem mindestens einem Behältnis bzw. Vorformling aufweist.

Unter Bewegungskraft wird eine Zentrifugalkraft und/oder eine Beschleunigungskraft und/oder eine resultierende Kraft mindestens einer dieser beiden mit der Schwerkraft verstanden, nicht aber die Schwerkraft allein.

Erfindungsgemäß ist die Aufnahmeeinrichtung zum Ausrichten des Vorformlings zumindest zeitweise zumindest mittelbar und bevorzugt unmittelbar in Bezug auf wenigstens eine durch das Bewegen der Transporteinheit auf die Aufnahmeeinrichtung und/ oder den Vorformling in Folge der Bewegung einwirkenden Kraft bewegbar oder ausgerichtet. Es ist hierbei denkbar, dass beispielsweise ein Schwenken des Vorformlings gegenüber der Lotrechten erfolgt.

Die Fördervorrichtung ist somit bevorzugt eine Behältnisbehandlungsmaschine des umlaufenden Typs, welche unter anderem zum Transport von Behältern und/oder Flaschen ausgebildet ist, wobei sie Mittel zum Behandeln oder Transportieren aufweist, welche die Behältnisse oder deren Vorformlinge in einem Winkel zur Lotrechten transportieren bzw. die Mittelachse besagter Behälter bzw. Vorformlinge gegenüber der Drehachse der transportierenden Einrichtung um einen Winkel kippt, um zum Beispiel eine geringeres Moment der Massenkräfte des Behälters oder Vorformlings auf den Handhabungspunkt besagten Behälters oder Vorformlings zu erzeugen.

Unter der Ausrichtung wird im Wesentlichen eine Lage einer Vorformlingslängsachse zu mindestens einer auf den Vorformling während des Transports einwirkenden Kraft, wie z.B. der Fliehkraft, in einem Winkel von beispielsweise weniger als 85°, bevorzugt zwischen 35° und 70° und besonders bevorzugt weniger als 20° verstanden.

Es ist somit vorstellbar, dass die Aufnahmeeinrichtung und/ oder der Vorformling in einer fixen oder variablen Orientierung gegenüber der Transportkomponente angeordnet ist.

Dies ist vorteilhaft, da eine Ausrichtung der Vorformlinge an Bewegungsbedingungen anpassbar ist. Somit kann eine Verformung des Vorformlings bzw. der Vorformlinge verhindert bzw. reduziert werden. Hierzu könnte beispielsweise ein zumindest zeitweise aktives und/ oder passives Ausschwenken des Vorformlings während dem Transport vorgesehen werden. Denkbar wäre dann auch eine Übergabe in einen Formenträger, wie z. B. einen buchartig aufklappbaren Blasformträger oder eine Blasform, dessen Öffnungsachse z. B. im 45° Winkel in Bezug auf den Radius (der Bewegungsbahn) liegt. Das Blasrad kann dabei eine Ausbildung im Sinne eines "umgedrehten Sonnenschirms" annehmen. Im Prinzip können auch anders gestaltete Blasformträgeröffnungsmechanismen mit der beschriebenen Ausrichtung vorgesehen sein, insbesondere mit einer feststehenden Blasformträgerhälfte und einer beweglichen. Ebenso wäre eine lineare Öffnungsbewegung mindestens eines Blasformträgers denkbar oder anders gestaltete Mechanismen denkbar.

Bevorzugt fördert die Fördereinrichtung das Behältnis bzw. den Kunststoffvorformling derart, dass die Längsachse des Vorformlings zumindest zeitweise geneigt ist, wobei unter geneigt ein Winkel verstanden wird, der zwischen einer vertikalen Ausrichtung und einer horizontalen Ausrichtung liegt und der bevorzugt gegenüber einer vertikalen Richtung um einen Winkel geneigt ist, der zwischen 10° und 80° liegt.

In einer weiteren bevorzugten Ausführungsform der vorliegenden Erfindung ist die Kraft, die Zentrifugalkraft, die bei der Bewegung auf einer Kurvenbahn resultiert und/ oder eine Beschleunigungskraft, die sich z. B. beim Verändern der Transportgeschwindigkeit ergibt und/ oder die gegenüber der Bewegungsrichtung geneigt orientiert ist. Es ist ferner denkbar, dass die Kraft zumindest teilweise die Trägheitskraft und/ oder die Gewichtskraft des Vorformlings umfasst oder darstellt bzw. sich aus der vektoriellen Summe dieser Kräfte ergibt. Diese Ausführungsform ist vorteilhaft, da die Ausrichtung an möglichst viele Bewegungsabläufe und Bewegungsbedingungen anpassbar ist.

In einer weiteren bevorzugten Ausführungsform der vorliegenden Erfindung ist die Aufnahmeeinrichtung um mindestens eine erste Achse schwenkbar. Bevorzugt ist die Aufnahmeeinrichtung um einen Winkel von 30° bis 120° und besonders bevorzugt rechtwinklig um eine zur Richtung der Fliehkraft bevorzugt im Wesentlichen rechtwinklig stehende Achse schwenkbar. Vorteilhaft ist diese Schwenkachse auch senkrecht zu einer Richtung der Gewichtskraft. Bei einer weiteren vorteilhaften Ausführungsform ist die Schwenkachse parallel zu einer geometrischen Tangente an die Bewegungsbahn der Kunststoffvorformlinge. Diese Ausführungsform ist vorteilhaft, da ein Freiheitsgrad besteht, der zur Reduzierung von Belastung, wie z. B. der Biege- und/ oder Torsionsbelastung ausgenutzt werden kann.

In einer weiteren bevorzugten Ausführungsform der vorliegenden Erfindung ist die Aufnahmeeinrichtung um eine zweite Achse schwenkbar. Bevorzugt befinden sich die erste Achse und die zweite Achse in derselben Ebene. Es ist jedoch ebenfalls denkbar, dass sie sich in verschiedenen Ebenen erstrecken. Besonders bevorzugt ist die zweite Achse geneigt zu der ersten Achse ausgebildet.

Diese Ausführungsform ist vorteilhaft, da neben dem ersten Freiheitsgrad bevorzugt zumindest zeitweise ein zweiter Freiheitsgrad für die Bewegung der Aufnahmeeinrichtung bzw. des Vorformlings gegeben ist.

In einer weiteren bevorzugten Ausführungsform der vorliegenden Erfindung ist der Vorformling während dem Transport zumindest zeitweise lediglich mit einer Kraft in seiner Körperlängsrichtung beaufschlagbar.

Diese Ausführungsform ist vorteilhaft, da so höchste Transportgeschwindigkeiten vorsehbar sind, da der Vorformling in am höchsten belastbarer Weise belastet wird. So ist es möglich, dass der Vorformling derart ausgerichtet wird, dass sich seine Längsrichtung in derjenigen Richtung ausrichtet, welche der Richtung der auf ihn wirkenden resultierenden Kraft aus der Fliehkraft und der Gewichtskraft entspricht. Um ein sicheres Transportieren des Vorformlings bei dieser Ausführungsform zu gewährleisten und um die Beschleunigungskräfte aufzunehmen, wird der Vorformling insbesondere in mindestens einer, bevorzugt in beiden Richtungen seiner Längsachse von der Aufnahmeeinrichtung formschlüssig gestützt. Dies kann beispielsweise an einer am Vorformling angeordneten, umfänglich ringförmigen Ausprägung (Tragring) geschehen. Insbesondere könnte die Aufnahmeeinrichtung hier den Vorformling zwischen der Fläche an der Unterseite des Tragrings und dessen Oberseite, oder alternativ an der Oberkante eines oberhalb vom Tragring angeordneten Mundstücks einspannen.

Wenn sowohl eine Beschleunigungskraft als auch eine Fliehkraft mit der Ausrichtung kompensiert werden soll, wäre es auch möglich, die Aufnahmeeinrichtung bzw. den Vorformling um zwei Achsen schwenkbar zu lagern. Dies kann insbesondere durch zwei räumlich getrennte einachsige Schwenklager aber auch durch ein Kugelgelenk erfolgen. In anderen Worten wird der Vorformling sowohl um einen gewissen Winkel in einer Ebene verschwenkt, die durch den Vektor der Fliehkraft und den der Gewichtskraft aufgespannt wird (Kompensation Fliehkraft), als auch um einen gewissen Winkel in einer Ebene, die durch die Tangente an die Kurvenbahn und die Gewichtskraft aufgespannt wird (Beschleunigung in Transportrichtung, insbesondere in Drehrichtung des Sterns). Dabei kann die Beschleunigungskraft durch eine Abstandsänderung der Vorformlinge zueinander hervorgerufen werden. Dies ist beispielsweise bei der Übergabe von einer Erwärmungseinrichtung zu einem Blasrad erforderlich, da die Blasformen normalerweise einen größeren Abstand zueinander aufweisen als die Aufnahmen für die einzelnen Vorformlinge in der Erwärmungseinrichtung. Man kann also von Änderungen der (Kreis-) Bahngeschwindigkeit sprechen.

Weiterhin wäre denkbar, den Vorformling auch noch drehbar um seine Längsachse zu lagern, was beispielsweise bei asymmetrischen Vorformlingen, die beispielsweise mit einem Griff ausgestaltet sind, vorteilhaft ist. Wenn beispielsweise der ein Griff und die Vorformlingslängsachse eine Ebene aufspannen, so könnte der Vorformling beispielsweise vor einem Einsetzen einer Fliehkraft mit dieser Ebene in die Ebene, die durch den Vektor der Fliehkraft und der der Gewichtskraft aufgespannt wird, aktiv ausgerichtet werden. Alternativ würde sich der Vorformling auch selbst kurz nach dem Einwirken einer Kraft selbst ausrichten.

Denkbar sind dabei viele Varianten der Fliehkraftreduzierung, z. B. durch eine geänderte Lage der Kavitäten, d. h. der Blasformteile. Sowohl für die auftretenden Biegekräfte auf den Vorformling, als auch auf die Kräfte, die beim Öffnen und Schließen der Blasform gegenzuhalten sind, geht mit jeder Abweichung der Bewegungsachsen bzw. der Vorformlingmittelachse von der Drehachse der Fördervorrichtung, wie z. B. eines Blasrades bzw. eines Transportsterns, eine Reduzierung der Kräfte einher.
Die den Vorformling aufnehmenden Vorrichtungskomponenten könnten daher komplett fliehkraftneutral anordbar sein. Beispielsweise aus dem Heizmodul kommend, könnten die Vorformlinge an die Fördervorrichtung, z. B. in Form eines Transfersterns, übergeben werden, dessen Drehachse senkrecht zur Fliehkraft angeordnet ist, die Drehachse des Blasrades und die Drehachse des Transfersterns können senkrecht zur Vorformlingsachse orientiert sein.

In einer weiteren bevorzugten Ausführungsform der vorliegenden Erfindung ist die Ausrichtung der Aufnahmeeinrichtung und/ oder des Behältnisses selbsttätig durchführbar. Bevorzugt ist die Aufnahmeeinrichtung oder der Vorformling in der Aufnahmeeinrichtung derart gelagert, dass sich die Aufnahmeeinrichtung und/ oder der Vorformling im Bereich der gegebenen Freiheitsgrade in einen Zustand optimaler bzw. geringster Belastung ausrichtet. Diese Ausführungsform ist vorteilhaft, da die Aufnahmeeinrichtung so mittels einfachsten Mitteln und somit kostengünstig an die jeweiligen Bewegungsbedingungen anpassbar ist.

In einer weiteren bevorzugten Ausführungsform der vorliegenden Erfindung ist die Ausrichtung der Aufnahmeeinrichtung und/ oder des Behältnisses mittels einer Ausrichteinrichtung durchführbar. Bevorzugt ist eine Steuereinrichtung (oder Regelung) und/ oder Sensoreinrichtung vorgesehen, durch die z. B. Geschwindigkeiten, Beschleunigungen, Kräfte, Biegungen der Vorformlinge und/ oder Ähnliches erfassbar und/ oder auswertbar sind. Ein Kraftsensor kann beispielsweise direkt an der Aufnahmeeinrichtung angeordnet sein. Eine Biegung eines Vorformlings wird bevorzugt von einer Kamera erfasst und ausgewertet. Die Kamera ist insbesondere stationär angeordnet, kann aber auch instationär angeordnet sein. Die Sensoren oder Kameras können entweder stationär oder mitlaufend an der Aufnahmeeinrichtung angebracht sein.

Diese Ausführungsform ist vorteilhaft, da durch die Ausrichteinrichtung Ausrichtbewegungen vorgebbar sind, wodurch die Bewegung der Vorformlinge bzw. der Aufnahmeeinrichtung in Abhängigkeit von erfassten Daten und/ oder vorgegeben Einstellungen durchführbar und / oder regelbar ist. Insbesondere kann so auf unterschiedliche Produktionsgeschwindigkeiten der Maschine reagiert werden.

In einer weiteren bevorzugten Ausführungsform der vorliegenden Erfindung umfasst die Ausrichteinrichtung mindestens einen Motor, insbesondere einen Servomotor, der mit der Transportkomponente und/ oder der Aufnahmeeinrichtung in Kontakt steht.

Bevorzugt ist durch den Motor, der z. B. ein Elektromotor, ein Pneumatikmotor, ein Hydraulikmotor, ein Linearmotor und/ oder ein sonstiger Motor sein kann, die Ausrichteinrichtung und/ oder das Behältnis gegenüber der Transportkomponente bewegbar.

Dies ist vorteilhaft, da mittels des Motors sehr schnelle Bewegungsänderungen umsetzbar sind bzw. die Bewegung der Ausrichteinrichtung sehr schnell an veränderte Bewegungsbedingungen anpassbar ist. Ferner lassen sich die Motoren bzw. der Motor für beliebige Bahnen beliebig steuern und kann über eine Steuereinrichtung, die z. B. Sensoren umfasst, selbstlernend betrieben werden.

In einer weiteren bevorzugten Ausführungsform der vorliegenden Erfindung ist die Ausrichteinrichtung zumindest abschnittsweise als eine Steuerkurve ausgebildet.

Diese Ausführungsform ist vorteilhaft, da so eine definierte Bewegungscharakteristik der Ausrichteinrichtung vorgebbar ist. Insbesondere ist diese Ausführungsform weniger aufwendig als die Verwendung von Motoren.

Denkbar wäre auch der Einsatz von Federn zum Vorspannen des Aufnahmeelements gegen einen definierten Anschlag in Kombination mit einer der erwähnten Ausrichteinrichtungen.

Bevorzugt erfolgt das Ausschwenken und/ oder das Zurückschwenken des Vorformlings bzw. des Behältnisses, d. h. das Ausschwenken beispielsweise aus einer im Wesentlichen senkrechten Position in eine dagegen geneigte Position bzw. umgekehrt, vor der Übergabe an eine weitere Einrichtung, wie z. B. ein Blasrad, mittels einer aktiven Steuerung. Diese Bewegungen der Aufnahmeeinrichtung und/ oder des Vorformlings können dabei beispielsweise mittels einer Auslenkeinrichtung, wie beispielsweise einer Steuerkurve und/ oder einem Servomotor durchgeführt werden.

In einer weiteren bevorzugten Ausführungsform der vorliegenden Erfindung ist die Ausrichtung der Aufnahmeeinrichtung abschnittsweise selbsttätig und/ oder abschnittsweise geführt durchführbar.

Diese Ausführungsform ist vorteilhaft, da z. B. in Übergabebereichen mittels dem Führen der Aufnahmeeinrichtung äußerst genaue Bewegungen durchführbar bzw. Ausrichtungen einstellbar sind, während in weiteren Abschnitten der Fördervorrichtung beispielsweise möglichst wenige Bauteile vorgesehen werden können, da es denkbar ist, dass in diesen Bereichen zumindest abschnittsweise keine Steuerkurve vorgesehen ist.

Vorteilhaft ist vor der Fördervorrichtung eine Heizeinrichtung zum Erwärmen der Kunststoffvorformlinge angeordnet. Diese Heizeinrichtung kann beispielsweise ein lnfrarotofen oder auch ein Mikrowellenofen sein, durch welchen die Kunststoffvorformlinge transportiert werden.

In dieser Heizeinrichtung wäre ein Einsatz des erfindungsgemäßen Gedankens ebenfalls vorstellbar. Die Vorformlinge sind dabei häufig auf Heizdornen, die die Vorformlinge als Innengreifer als Aufnahmeeinheit durch den Ofen transportieren, aufgesteckt und werden an Erwärmungseinrichtungen vorbei oder wahlweise mit ihnen in Heizkavitäten transportiert. In diesen Öfen werden die Vorformlinge zumindest zeitweise ebenfalls auf kurvenförmigen Bahnen transportiert, wo ebenfalls Fliehkräfte auftreten können. Hier wäre es denkbar, ebenfalls eine zumindest zeitweise Ausrichtung des Heizdorns wie in oben beschriebener Weise vorzunehmen. Ebenfalls ist an die häufig vorkommende Eigenrotation des Vorformlings beim Erwärmungsvorgang gedacht. Bei fehlerhaften oder asymmetrischen Vorformlingen kann es hier durch die Eigenrotation oder durch fehlerhaftes Aufstecken auf den Heizdorn zum Taumeln bis hin zum Verlust des Vorformlings kommen. Hier könnte man beispielsweise durch ein gesteuertes Drehen und der schon beschriebenen Regelungseinrichtung entgegenwirken. So kann die Winkelgeschwindigkeit der Eigenrotation bei einem registrierten Fehler (Taumeln) beispielsweise reduziert werden.

Denkbar wäre ebenfalls ein Einsatz des erfindungsgemäßen Gedankens bei einem Transport von Vorformlingen oder Behältern auf Shuttles durch eine Abfüllanlage und insbesondere durch den Ofen bis zur Blasformung in einer Blasformmaschine. Die Vorformlinge werden dabei auf eine auf dem Shuttle angeordnete Aufnahmeeinheit, insbesondere Dorne aufgesteckt. Die auf einer Bahn bzw. Führung bewegten Shuttles oder Schlitten sind hier insbesondere als Läufer und die Bahnen als Stator eines Linearmotors ausgebildet. Es könnten aber auch andere mechanische Antriebe vorstellbar sein. Hier könnten beispielsweise die auftretenden Kräfte durch eine Verstellung der Aufnahmeeinheit auf dem Shuttle oder durch eine Neigung der Bahnen oder Führungen - ähnlich zu einer Achterbahn - reduziert werden. Ebenfalls wären, wie oben allgemein beschrieben, Beschleunigungskräfte der Shuttles selbst reduzierbar.

Die vorliegende Erfindung ist ebenfalls auf ein Verfahren zum Fördern von Behältnissen, insbesondere Vorformlingen, gerichtet. Das Verfahren umfasst bevorzugt die Schritte der thermische Konditionierung eines Vorformlings in einer Heizeinrichtung, der Übergabe des Vorformlings von der Heizeinrichtung auf eine Transporteinheit einer weiteren Fördervorrichtung, des Bewegens einer Transporteinheit zum Transportieren von mindestens einem Behältnis bzw. Vorformling auf mindestens einer Bahn, insbesondere einer zumindest abschnittsweise als Kurvenbahn ausgebildete Bahn, welche Transporteinheit zumindest mittelbar mit einer Antriebseinheit verbunden ist und die eine auf der Bahn bewegbare Transportkomponente und eine bevorzugt gegenüber dieser Transportkomponente bewegbare Aufnahmeeinrichtung zum Aufnehmen von dem mindestens einen Vorformling aufweist, sowie des Ausrichtens des Vorformlings, insbesondere gegenüber der Kurvenbahn, mit der Aufnahmeeinrichtung, wobei die Aufnahmeeinrichtung zumindest mittelbar in Abhängigkeit von mindestens einer beim Bewegen der Transporteinheit auf die Aufnahmeeinrichtung und/ oder den Vorformling einwirkenden Kraft ausgerichtet ist und bevorzugt bewegt wird und bevorzugt den Schritt des Expandierens des Vorformlings (10) gegen die Innenwandung einer Blasform umfasst.

Gegebenenfalls kann die Übergabe in die Blasform durch einen, insbesondere aktiv gesteuerten, Greifarm bzw. einen weiteren Greifarm realisiert werden, damit eine Kollision z. B. der primären Übergabemechanik der Fördervorrichtung, die z. B. als Transferstern ausgebildet ist, mit der Reckstangenmechanik verhindert wird (einfache Greifermechanik, Rhomboidgetriebe).

Varianten sind denkbar bezüglich der Lage der Übergaben, es ist z. B. sowohl eine Anordnung der Übergabe außerhalb als auch innerhalb des Blasrades denkbar. Diese könnte beispielsweise ein größeres Blasrad erforderlich machen, wobei denkbar ist, dass im Falle eines solchen Blasrades weniger Komponenten außerhalb des Blasrades vorgesehen werden müssen.

Bevorzugt befindet sich die Blasstation und die Transportsternklammer (bzw. die Aufnahmeeinrichtung) in einem bestimmten Winkel, der sich durch die Fliehkraft bei gängigen Leistungen (Umlaufgeschwindigkeit) ergibt. Diese betragen für eine Blasstation beispielsweise 2000 Umdrehungen pro Stunde, können aber auch von 1000 bis 3000 Umdrehungen pro Stunde betragen. Für die Transportsternklammern kann die Umlaufgeschwindigkeit bzw. Transportgeschwindigkeit das Dreifache dessen betragen.

Es ist zudem denkbar, dass weitere fördernde Vorrichtungen die transportierten Behältnisse in an Bewegungsbedingungen bzw. Belastungen angepasster Weise transportieren. Es ist daher ebenfalls denkbar, dass man "fiiehkraftneutrai" rinsen, abfüllen oder auch verschließen kann. Insbesondere das fliehkraftneutrale Handhaben nach der Füllung der Flasche und das Verschließen eröffnet die Möglichkeit, mit geringerem Kopfraumvolumen und höheren Füllpegeln sensible Getränke bei der Abfüllung weniger mit Sauerstoff zu belasten.

Kurz vor der Übergabe der Vorformlinge an die Aufnahmeeinheit (Blasstation) kann insbesondere die "fliehkraftneutrale" Ausrichtung vollständig oder teilweise aufgehoben werden.

Weitere Vorteile, Ziele und Eigenschaften vorliegender Erfindung werden anhand nachfolgender Beschreibung anliegender Zeichnungen erläutert, in welchen beispielhaft Fördervorrichtungen für die Förderung von Behältnissen dargestellt sind. Bauteile der Fördervorrichtungen, welche in den Figuren wenigstens im Wesentlichen hinsichtlich ihrer Funktion übereinstimmen, können hierbei mit gleichen Bezugszeichen gekennzeichnet sein, wobei die Bauteile nicht in allen Figuren beziffert oder erläutert sein müssen.

Darin zeigen:
- Fig. 1: eine Fördervorrichtung gemäß dem Stand der Technik;
- Fig. 2: eine erste Ausführungsform einer erfindungsgemäßen Fördervorrichtung;
- Fig. 3: die erste Ausführungsform der vorliegenden Erfindung in einem zweiten Zustand;
- Fig. 4: eine zweite Ausführungsform der vorliegenden Erfindung;
- Fig. 5: eine dritte Ausführungsform der vorliegenden Erfindung;
- Fig. 6: eine Blasmaschine gemäß dem Stand der Technik;
- Fig. 7: eine weitere Ausführungsform der vorliegenden Erfindung am Beispiel einer Blasmaschine;
- Fig. 8: noch eine weitere Ausführungsform der vorliegenden Erfindung am Beispiel einer Blasmaschine;
- Fig. 9: und noch eine weitere Ausführungsform der vorliegenden Erfindung;
- Fig. 10: ein Beispiel eines Transportweges, in dem eine erfindungsgemäße Förderung von Behältnissen erfolgt;
- Fig. 11: ein weiteres Beispiel eines Transportweges;
- Fig. 12: ein Shuttlesystem zum Transportieren der Behältnisse; und
- Fig. 13: verschiedene Ausrichtmöglichkeiten zum Ausrichten des Shuttles.

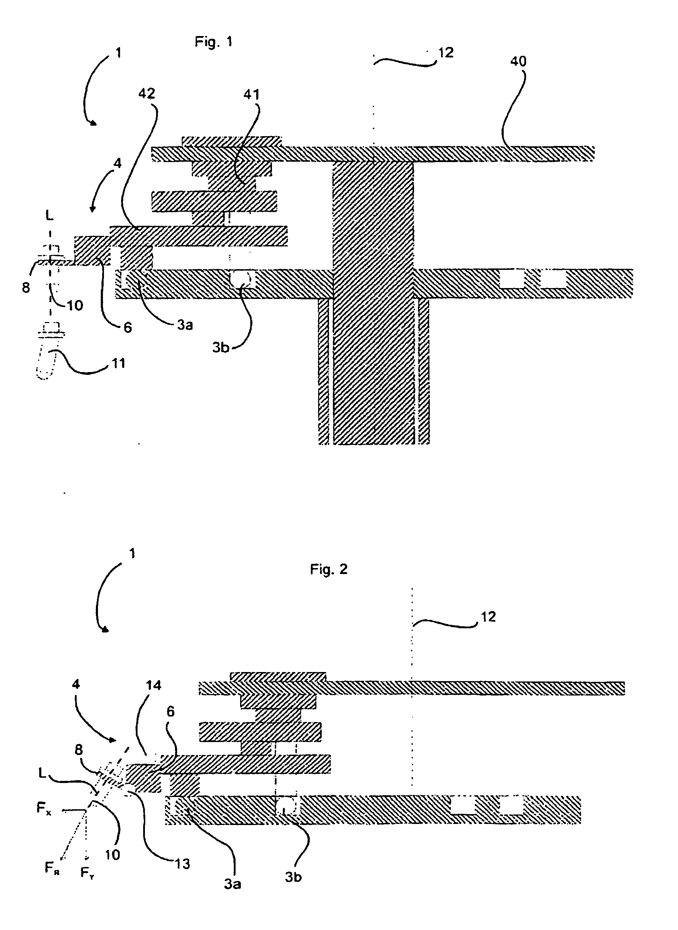

In Fig. 1 ist eine Fördervorrichtung 1 gemäß dem Stand der Technik dargestellt. Diese Fördervorrichtung 1 weist eine Transporteinheit 4 auf, die aus einer Transportkomponente 6 und einer damit verbundenen Aufnahmeeinrichtung 8 besteht. Die Aufnahmeeinrichtung 8 dient zum Aufnehmen eines Vorformlings 10 und ist insbesondere eine Klammer oder ein Dorn. Bei einer Bewegung der Vorrichtung 1, d. h. insbesondere bei einer Drehung um die Rotationsachse 12 und somit bei einem Bewegen, insbesondere Abgleiten, der Vorrichtung 1 auf Kurven für den Teilungsverzug 3a, 3b, erfolgt eine Belastung des erwärmten Vorformlings 10. in Abhängigkeit von der Drehgeschwindigkeit der Vorrichtung 1 wirken Kräfte auf den Vorformling 10, wodurch dieser sich verformt. Ein verformter bzw. defekter Vorformling 10 ist beispielsweise durch das Bezugszeichen 11 gekennzeichnet. Die durch die Vorformlinge 10 beschriebene Transportbahn, wird im Wesentlichen durch die Kurvenbahnen 3a, 3b bestimmt, wobei in der Bahn 3a ein Kurvenfolger eines Schlitten eines ausfahrbaren Linearlagers 42 und in der Bahn 3b ein mit einem Hebel zu einer Drehachse 43 der Transporteinheit 4 angeordneter Kurvenfolger entlangfährt. Das Bezugszeichen 41 bezieht sich auf ein drehbares Wälzlager. Dieses ist wiederum an einer um die Achse 12 drehenden Lagerscheibe 40 angebracht. Der um die Drehachse 43 schwenkbare Teil der Transporteinheit 4 umfasst dabei beispielsweise das Linearlager 42, die Transportkomponente 6 und die Aufnahmeeinheit 8. Durch die kombinierte Dreh- und Ausfahrbewegung wird der Transportpfad der Vorformlinge 10 bestimmt und ist deswegen nicht genau kreisförmig. Denkbar wären jedoch auch andere Funktionsweisen der Fördervorrichtung, bei der nur eine oder keine Schwenkbewegung vorgesehen ist, oder bei der die Kurven durch Servoantriebe oder Linearantriebe zur Durchführung von Schwenk- und Linearbewegungen der einzelnen Komponenten ersetzt sind.

Diese Funktionsweisen sind in ähnlicher Weise auf die nachfolgenden Figuren übertragbar.

In Fig. 2 ist eine erfindungsgemäße Fördervorrichtung 1 dargestellt, die ebenfalls Kurven für den Teilungsverzug 3a, 3b aufweist. Diese Vorrichtung 1 umfasst ferner mindestens eine Transporteinheit 4 und besonders bevorzugt eine Vielzahl an Transporteinheiten 4. Die Transporteinheit 4 besteht dabei aus einer Transportkomponente 6 und einer gegenüber dieser Transportkomponente 6 bewegbaren Aufnahmeeinrichtung 8. Mittels der Aufnahmeeinrichtung 8 kann beispielsweise ein Behältnis, insbesondere ein Vorformling 10, von der Fördervorrichtung 1 aufgenommen werden. Die Aufnahmeeinrichtung 8 ist dabei reibschlüssig und/ oder formschlüssig mit dem Vorformling 10 koppelbar. Bei der Aufnahmeeinrichtung kann es sich beispielsweise um eine Greifklammer handeln, welche die Behältnisse unterhalb, bevorzugt oberhalb, deren Tragring greift. Dabei kann diese Greifklammer gesteuert oder auch passiv (beispielsweise durch Federn vorgespannt) sein.

Eine Bewegung der Fördervorrichtung 1 erfolgt ebenfalls bevorzugt um die Rotationsachse 12. In Abhängigkeit der Bewegung der Fördervorrichtung 1, insbesondere der Geschwindigkeit der Fördervorrichtung 1, erfolgt eine Ausrichtung des Vorformlings 10 gegenüber den übrigen Vorrichtungskomponenten, insbesondere gegenüber der Transportkomponente 6. Diese Ausrichtung erfolgt bevorzugt durch eine Rotation bzw. eine Schwenkbewegung der Aufnahmeeinrichtung 8 um die erste Achse 13, die bevorzugt zwischen der Transportkomponente 6 und der Aufnahmeeinrichtung 8 angeordnet ist.

In der Transportkomponente 6 können die Schwenklager für die Öffnungs- und Schließbewegung der Greifklammer angeordnet sein.

Eine derartige Ausrichtung kann bevorzugt mittels eines Antriebs 14, der besonders bevorzugt ein Servoantrieb ist, durchgeführt werden. Es ist hierbei denkbar, dass der Antrieb mittels einer Steuereinrichtung in Abhängigkeit von auf den Vorformling 10 wirkenden Kräfte und/ oder einer Bewegungscharakteristik der Fördervorrichtung 1 die Ausrichtung der Aufnahmeeinrichtung 8 und/ oder des Vorformlings 10 bewirkt. Der Antrieb 14 kann entweder direkt oder mittels eines Getriebes die Bewegung der Aufnahmeeinrichtung 8 antreiben. Es ist dieser Darstellung zu entnehmen, dass auf den Vorformling 10 Kräfte in X-Richtung und Y-Richtung wirken. Besonders bevorzugt erfolgt eine Ausrichtung der Aufnahmeeinrichtung 8 und/ oder Vorformlings 10 derart, dass die Kräfte (Fₓ, Fy) in X- und Y-Richtung derart aufgeteilt sind, dass die daraus resultierende Kraftkomponente (F_{R}) sich in Grundkörperlängsrichtung des Vorformlings 10 erstreckt.

Es ist dabei vorstellbar, dass nicht nur Kraftkomponenten in X- und Y-Richtung, sondern ebenfalls in X-, Y- und Z-Richtung berücksichtigt werden (bedingt beispielsweise durch eine Beschleunigung oder Verzögerung des Blasrads und davon abhängiger Verzögerung des Transportsterns) und eine Ausrichtung des Vorformlings 10 und/ oder der Aufnahmeeinrichtung 8 derart erfolgt, dass die Resultierende ebenfalls in Grundkörperlängsrichtung des Vorformlings 10 orientiert ist. Die Längsrichtung des Kunststoffvorformlings ist durch das Bezugszeichen L gekennzeichnet. Der Vorformling 10 erfährt bei der in Fig. 2 gezeigten Ausrichtung in seinem unteren, dem verschlossenen Abschnitt, eine Zugbelastung und in seinem oberen Abschnitt, d. h. im Bereich des Tragrings und oberhalb des Tragrings, eine Druckbelastung. Der Bereich oberhalb des Tragrings wird jedoch üblicherweise nicht mit erwärmt und verformt sich daher nicht. Die Z-Richtung ist hier bevorzugt im Wesentlichen tangential zur Förderrichtung und geht in die Zeichenebene hinein.

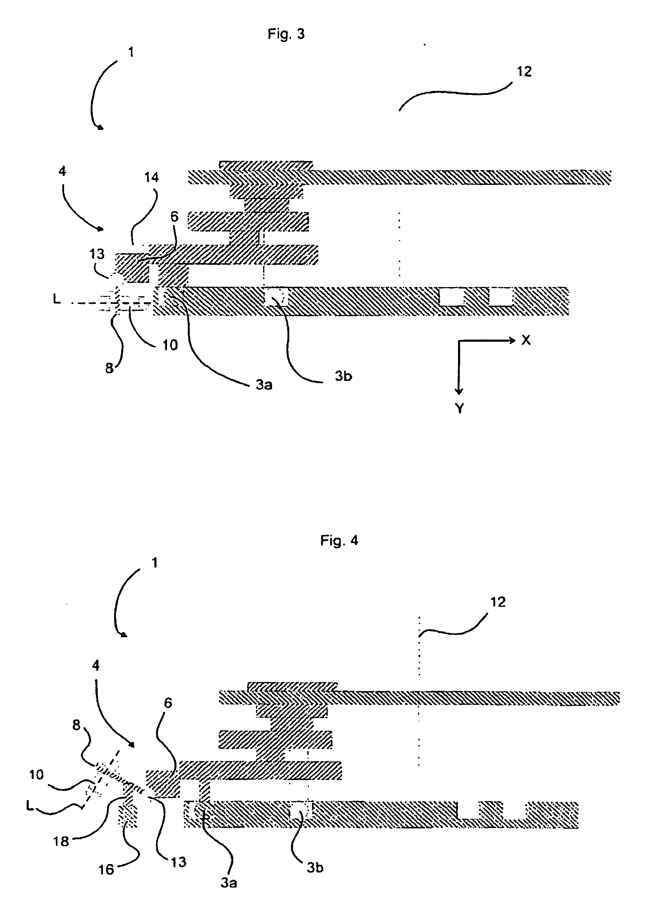

In Fig. 3 ist die in Fig. 2 gezeigte Ausführungsform in einer weiteren Ausrichtung dargestellt. Gemäß dieser Darstellung erfolgt bei einer Rotation der Fördervorrichtung 1 um die Rotationsachse 12 eine Zugbelastung des oberen Abschnittes des Vorformlings 10, d. h. des Öffnungsbereichs, und eine Druckbelastung des unteren Abschnittes des Vorformlings 10, d. h. des umschlossenen Abschnitts. Die Aufnahmeeinrichtung 8 ist in dieser Konfiguration bevorzugt derart mit dem Vorformling 10 gekoppelt, dass eine Verschiebung bzw. eine Relativbewegung des Vorformlings 10 gegenüber der Aufnahmeeinrichtung 8 in X-Richtung nicht möglich ist. In anderen Worten läuft die geschlossene Seite des Vorformlings 10 weiter innen um als die offene Seite.

In Fig. 4 ist eine weitere Ausführungsform der vorliegenden Erfindung dargestellt. Gemäß dieser Ausführungsform weist die Fördereinrichtung 1 eine Transporteinheit 4 auf, die aus einer Transportkomponente 6 und einer ebenfalls gegenüber dieser Transportkomponente 6 bewegbaren Aufnahmeeinrichtung 8 besteht. Die Aufnahmeeinrichtung 8 wirkt dabei jedoch mit einer Steuerkurve 16 beispielsweise über einen Nocken 18 zusammen. Es ist hierbei denkbar, dass der Nocken 18 an der Steuerkurve 16 oder an der Aufnahmeeinrichtung 8 bzw. im Bereich der Aufnahmeeinrichtung 8 angeordnet ist. Die Steuerkurve 16 ist bevorzugt hinsichtlich der Höhe und/ oder des Angriffspunkts zu der Aufnahmeeinrichtung 8 definiert konfiguriert. Die Konfiguration der Steuerkurve 16 erfolgt bevorzugt in Abhängigkeit von einer Bewegungscharakteristik der Fördervorrichtung 1. Durch das Zusammenwirken beispielsweise der Aufnahmeeinrichtung 8, der Steuerkurve 16 und/oder des Nockens 18 kann somit in Abhängigkeit von der Bewegungscharakteristik der Fördervorrichtung 1 eine Auslenkung des Vorformlings 10 und/ oder der Aufnahmeeinrichtung 8 derart um die erste Achse 13 bewirkt werden, dass der Vorformling 10 möglichst nur in seiner Grundkörperlängsrichtung durch eine Kraft, insbesondere durch die Fliehkraft, belastet wird.

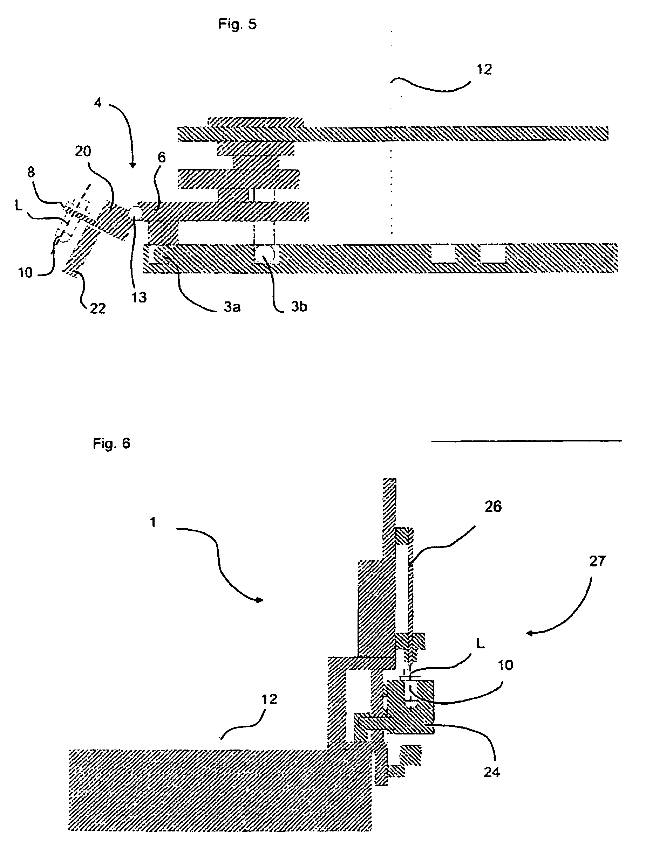

Der Fig. 5 lässt sich eine weitere erfindungsgemäße Ausführungsform der vorliegenden Erfindung entnehmen. Die Aufnahmeeinrichtung 8 kann dabei mittels einem fest angeordneten Zusatzgewicht 20 und/ oder einem mit der Aufnahmeeinrichtung 8 koppelbaren Zusatzgewicht 22 zumindest zeitweise oder dauerhaft ausgestattet sein. Es ist denkbar, dass in einzelnen Abschnitten der Transportbahn ein oder mehrere Zusatzgewichte 20, 22 mit der Aufnahmeeinrichtung 8 gekoppelt sind bzw. koppelbar sind. Eine Ausrichtung der Aufnahmeeinrichtung 8 und/ oder des Vorformlings 10 erfolgt z. B. abschnittsweise oder vollständig entlang dem Transportweg mittels der Gewichtskraft, d. h. die Aufnahmeeinrichtung 8, der Vorformling 10 und die jeweiligen Zusatzgewichte 20, 22 werden aufgrund der Fliehkraft um die erste Achse 13 rotiert. Es wird auch gemäß dieser Ausführungsform bevorzugt, dass die Belastung des Vorformlings 10 lediglich in dessen Grundkörperlängsrichtung erfolgt. Weiterhin kann es möglich sein, dass mindestens eines der Zusatzgewichte 20,22 an der Aufnahmeeinrichtung 8 entlang bewegbar ist oder an verschiedenen Bereichen der Aufnahmeeinrichtung 8 beispielsweise zum Verändern der Hebelverhältnisse fixierbar ist. Das gezeigte Zusatzgewicht kann daher die gewünschte Auslenkung der Kunststoffvorformlinge bewirken.

Es ist ferner vorstellbar, dass die in Fig. 5 gezeigte Ausführungsform abschnittsweise oder vollständig eine Steuerkurve 16 zum Ausrichten der Aufnahmeeinrichtung 8 und/ oder des Vorformlings 10 aufweist.

Die Position der beschriebenen Schwenkachse 13 kann bei den unterschiedlichen Ausführungsformen beliebig gewählt werden. Somit ist auch bei den Figuren 2 bis 4 irgendeine Position zwischen dem Linearlager42 und der Aufnahmeeinrichtung 8, insbesondere zwischen dem Linearlager 42 und der Transportkomponente 6 denkbar. Ebenfalls wäre es denkbar, auf die Transportkomponente 6 komplett zu verzichten und die Aufnahmeinrichtung 8 schwenkbar an dem Linearlager 42 anzuordnen. Die Transportkomponente 6 ist im weitesten Sinn nur ein Klotz, an dem die Aufnahmeeinrichtung 8 angeordnet ist.

In Fig. 6 ist eine Ausführungsform einer Fördereinrichtung 1 gemäß dem Stand der Technik dargestellt. Diese Fördervorrichtung 1 umfasst eine Blasform 24 und eine Reckstange 26 und bildet daher eine Blasstation 27 aus. Es ist dieser Darstellung zu entnehmen, dass der Vorformling 10 innerhalb der Blasform 24 und die Reckstange 26 um die Rotationsachse 12 bewegbar sind. Bei einer derartigen Bewegung der Blasform 24 und somit des Vorformlings 10 ist ebenfalls denkbar, dass daraus eine Beschädigung des Vorformlings 10 oder des erzeugten Behältnisses 10 aufgrund während der Bewegung der Vorrichtung 1 auf den Vorformling 10 bzw. das zugehörige Behältnisse wirkenden Kräfte resultiert.

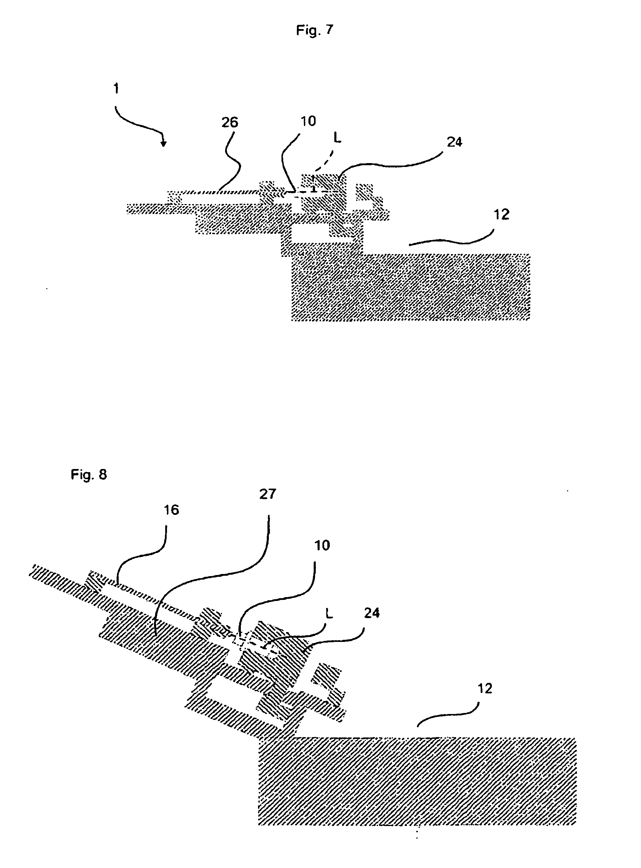

In Fig. 7 ist eine Fördervorrichtung 1, insbesondere eine Blasvorrichtung bzw. eine Blasmaschine derart ausgebildet, dass sich der Vorformling 10, die Blasform 24 und die Reckstange 26 in einer bevorzugt horizontalen Ebene und somit bevorzugt im Wesentlichen rechtwinklig zur Drehachse erstrecken.

In Fig. 8 ist eine weitere Ausführungsform der vorliegenden Fördervorrichtung 1, insbesondere einer Blasvorrichtung 27, dargestellt. In dieser Ausführungsform sind die Blasform 24, die Reckstange 26 und der Vorformling 10 in einer Ebene geneigt zur Horizontalen bzw. Lotrechten angeordnet. Bevorzugt ist die Ebene, in der die Blasform 24, die Reckstange 26 und der Vorformling 10 angeordnet sind, in einem Winkel von 1 ° bis 89° und besonders bevorzugt in einem Winkel von 20° bis 70° gegenüber einer horizontalen Ebene oder der Rotationsachse 12 ausgerichtet. Bevorzugt ist die gesamte Blasstation 27, bestehend aus einer Blasform 24 und/ oder einer Reckstange 26, in einem fixen Winkel gegenüber der Horizontalen ausgerichtet. Es ist jedoch ebenfalls denkbar, dass die Blasstation bzw. Blasmaschineneinheit 27 gegenüber der Horizontalen oder Vertikalen (je nach Orientierung der Fördervorrichtung 1) variabel ausrichtbar oder schwenkbar mittels Ausrichteinrichtungen gemäß den Figuren 2 bis 5 ist.

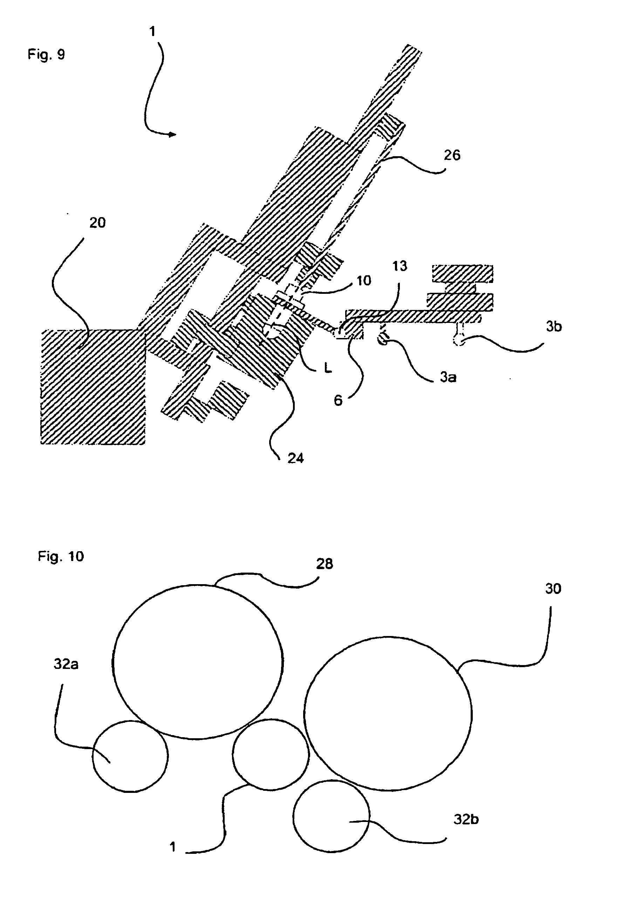

In Fig. 9 wird eine weitere Ausführungsform der erfindungsgemäßen Fördervorrichtung 1 gezeigt. Gezeigt wird die Übergabe eines Vorformlings von einer Fördervorrichtung 1 an eine weitere Fördervorrichtung 30, die hier als Blasrad ausgebildet ist. Die weitere Fördervorrichtung 30 umfasst hier die Blasstation 27, bestehend aus mindestens einer Blasform 24 und /oder mindestens einer Reckstange 26, die auf einem drehenden Blasrad 30 angeordnet ist. Die Blasstation 27 und somit auch die Längsachse des Vorformlings 10 schließen mit der Lotrechten, hier auch als die Drehachse der Fördervorrichtungen 30 und 1 ausgebildet, einen Winkel von ca. 30° bis 40° ein. Die Blasstation 27 ist bevorzugt unbeweglich am Blasrad 30 angeordnet, könnte aber auch schwenkbar sein. Die Schwenkbewegung der Blasstation 27 oder wie hier gezeigt der Aufnahmeeinheit 8, kann dabei beispielsweise abschnittsweise aktiv und/ oder passiv erfolgen. Bevorzugt erfolgt eine passive Auslenkung bzw. Ausrichtung der Blasstation 27 und/oder der Aufnahmeeinheit 8 gegenüber der Transportkomponente 6 vorgegeben über einen Servomotor und/ oder eine Steuerkurve. Es ist jedoch ebenfalls vorstellbar, dass eine Auslenkung der Blasstation 27 und/oder der Aufnahmeeinheit 8 alleine in Abhängigkeit von einer auf die Blasstation 27 und/oder die Aufnahmeeinheit 8 wirkenden Kraft, insbesondere der Fliehkraft, erfolgt. Eine Kombination aus aktiven und passiven Ausrichtvorgängen ist ebenfalls denkbar.

In Fig. 10 ist ein Beispiel für einen Transportweg dargestellt. Die Behältnisse, insbesondere die Vorformlinge 10, sind beispielsweise über eine Transporteinrichtung 32a einer Behandlungseinrichtung, wie z. B. einer Heizeinrichtung 28, zuführbar. Durch die Heizeinrichtung 28 werden die Vorformlinge 10 erhitzt. Die erhitzten Vorformlinge 10 sind beispielsweise mittels einer Fördervorrichtung, insbesondere einer erfindungsgemäßen Fördervorrichtung 1, von der Heizeinrichtung 28 zu einer weiteren Behandlungseinrichtung, wie z. B. einem insbesondere rotierendem Blasrad 30, förderbar. Das Blasrad 30 kann auch eine erfindungsgemäße Fördervorrichtung sein. Auf dem Blasrad 30 ist eine Vielzahl von Blasstationen 27 angeordnet. Nach dem Umformen der Vorformlinge 10 in Behältnisse in der Blasstation 30 sind die Behältnisse beispielsweise mittels einer weiteren Transporteinrichtung 32b zu einem weiteren Behandlungs- und/ oder Transporteinrichtung führbar. Es ist hierbei denkbar, dass neben oder anstelle der mit 1 gekennzeichneten Fördervorrichtung die weiteren Transporteinrichtungen 22a, 22b und/ oder einzelne dieser Fördervorrichtungen und/ oder alle oder einzelne der Behandlungseinrichtungen 28, 30 als Fördervorrichtung 1 im Sinne der vorliegenden Erfindung ausgestaltet sein können. Denkbar ist auch ein Einsatz bei allen, die Vorformlinge oder Behälter behandelnden, insbesondere wärmebehandelnden, Fördervorrichtungen, wie Sterilisationseinrichtungen oder rotierenden Fülleinrichtungen. Besonders geeignet ist der Einsatz der vorliegenden Erfindung in einer Füllvorrichtung bei der Abfüllung von Beuteln oder sehr dünnwandigen Kunststoffflaschen, die sich ebenfalls leicht durch die Fliehkraft verbiegen können. Als Beutel werden hierbei alle Aufnahmebehältnisse bezeichnet, die nicht durch Blasen erzeugt werden. Besonders bevorzugt weisen Beutel zumindest abschnittsweise übereinanderliegende und miteinander verbundene Materiallagen auf. Beutel können beispielsweise neben Anderem auf Papierbasis oder Kunststoffbasis hergestellt sein. Es ist aber auch denkbar, dass Beutel aus mehreren Materialien bzw. Materialgemischen bestehen.

Bei den Figuren 6 bis 11 ist die erfindungsgemäße Aufnahmeeinrichtung 8 und die Transporteinheit 4 die Blasform 24 bzw. Blasstation 27.

Denkbar wäre auch, nicht die ganze Blasstation 27 in einem Winkel zur Horizontalen auszurichten, sondern nur die Blasform 24 selbst. Auf eine direkt an der Blasstation angeordnete Reckstange 26 könnte in dem Fall auch verzichtet werden, indem entweder keine Reckstange 26 für die Blasformung verwendet wird oder das Recken des Vorformlings 10 in Transportrichtung gesehen nicht auf dem Blasrad 30, sondern vor dem Blasrad 30 in einem separaten Modul oder beispielsweise in der Heizeinrichtung 28 stattfindet.

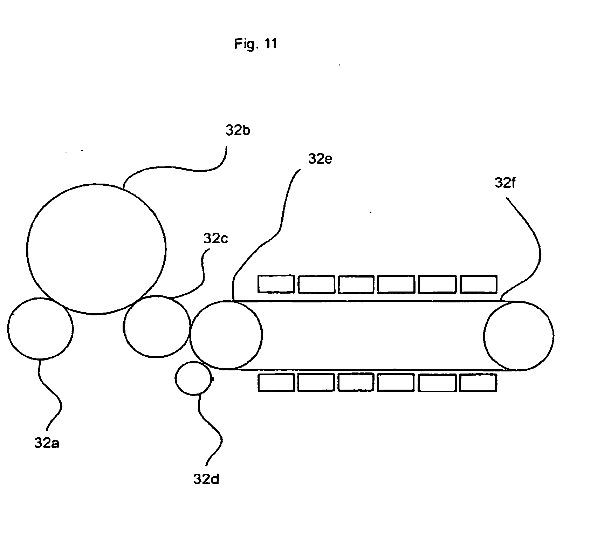

In Fig. 11 ist ein weiteres Beispiel für einen Transportweg der Vorformlinge 10 oder Behältnisse dargestellt. Es ist hierbei denkbar, dass einzelne oder alle der dargestellten rotatorischen und/ oder abschnittsweise linearen Transport- und/ oder Behandlungseinrichtungen 32a bis 32f als Fördervorrichtungen 1 im Sinne der vorliegenden Erfindung ausgebildet sind.

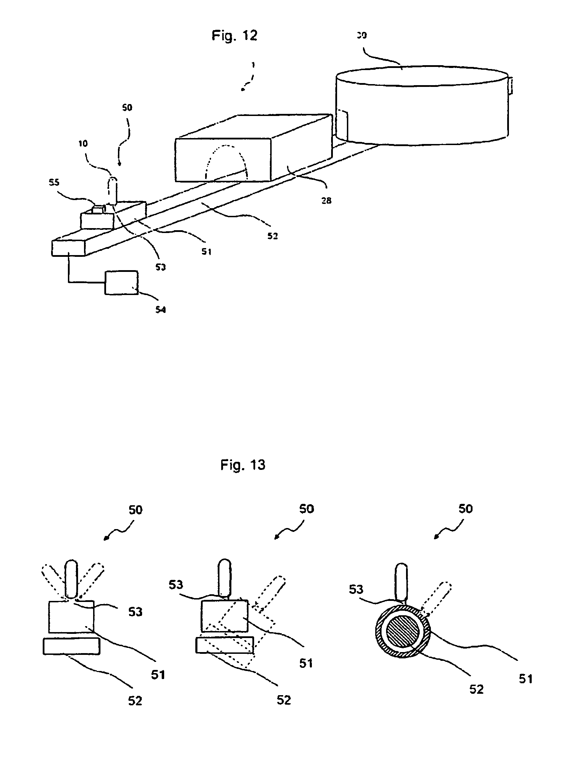

In Fig. 12 ist als weiteres Beispiel für eine erfindungsgemäße Vorrichtung ein Shuttlesystem zu sehen. Positionszeichen 50 bezieht sich hierbei auf den Shuttle selbst, an welchem ein gesteuert, schwenkbarer Dorn 53 angebracht ist. Auf dem Dorn ist ein Vorformling 10 aufgesteckt. Der Shuttle 50 weist neben Dorn 53 noch einen magnetisch betriebenen Läufer 51 auf, welcher mit der Führungsbahn 52 zusammenwirkt. Zusammen bilden die Führungsbahn 52 und der Läufer 51 einen Linearantrieb. Der Dorn 53 ist entweder durch nicht dargestellte Steuerkurven oder elektrisch in mindestens einer, bevorzugt zwei, Achsen mittels mindestens einem an dem Shuttle 50 angeordneten Antrieb 55 schwenkbar. Der Antrieb 55 ist bevorzugt ein Servomotor. Die Steuersignale zum Schwenken erhält der Dorn 53 von einer Steuerung 54, die an die Führungsbahn des Stators 52 angeschlossen ist. Die Geschwindigkeit des Shuttles 50 ist über die Steuerung 54 auch variabel vorgebbar. Abhängig von der Bahnkrümmung kann auf diese Weise die auf den Vorformling 10 einwirkende Kraft oder deren Richtung in Bezug auf den Vorformling 10 wahlweise durch die Vorgabe der Bahngeschwindigkeit und/oder durch den Neigungswinkel des Dorns eingestellt werden. Weiterhin sind schematisch eine Heizeinrichtung 28 und ein umlaufendes Blasrad 30 dargestellt, die von dem Shuttle 50 durchlaufen werden.

Wie man in Figur 13 sieht, ist alternativ zur gesteuerten Ausrichtung des Dorns 53 eine Ausrichtung bzw. Neigung der ganzen Führungsbahn 52 denkbar. Die geneigten Ausrichtungen sind jeweils durch die gestrichelten Linien dargestellt. Diese könnte sogar elastisch gelagert sein und aktiv über weitere, nicht dargestellte Antriebe ausgerichtet werden, um so bei unterschiedlichen Geschwindigkeiten des Shuttles 50 die Fliehkräfte zu beeinflussen. Weiterhin kann der Läufer 51 und die Führungsbahn 52 auch als tubularer Linearmotor ausgebildet sein. Auf diese Weise können unterschiedliche Neigungen sehr einfach realisiert werden, indem sich der ganze Shuttle 50 um den runden Stator 52 dreht.

Die Führungsbahn 52, die von den Behältern oder Vorformlingen 10 durchlaufen wird, ist insbesondere wenigstens abschnittsweise mäanderförmig, wobei auf unterschiedlichen Sektoren der Teilkreise bzw. der Führungsbahn 52 unterschiedliche Behandlungen wie preferential heating, ein Vorheizen in einem Vorheizofen, eine Endtemperaturprofilierung in einem wahlweise rund- oder linearlaufendem Mikrowellen- oder lnfrarotofen , eine Ausgleichsphase zur gleichmäßigen Temperaturverteilung in der Wanddicke, ein Vorblasen, ein Fertigblasen, ein Recken oder ein sterilisieren stattfinden können. Insbesondere können die Neigungswinkel der Behälter oder Vorformlinge bei diversen Behandlungen auch abhängig von der Behandlung eingestellt werden. So erweist es sich bei einer Sterilisation durchaus als vorteilhaft wenn das Sterilisationsmittel, beispielsweise gasförmiges H₂O₂, schräg oder außermittig zur Vorformlingslängsachse L eingebracht wird. Die Sterilisationswirkung könnte auch gemessen und der Neigungswinkel dementsprechend geregelt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Fördervorrichtung
- 3a,3b: Kurven für Teilungsverzug
- 4: Transporteinheit
- 6: Transportkomponente
- 8: Aufnahmeeinrichtung
- 10: Vorformling
- 11: defekter Vorformling
- 12: Rotationsachse
- 13: erste Achse
- 14: Antrieb
- 16: Steuerkurve
- 18: Kurvenfolge
- 20: Zusatzgewicht
- 22: Zusatzgewicht
- 24: Blasform
- 26: Reckstange
- 27: Blasvorrichtung, Blasstation
- 28: Heizeinrichtung
- 30: Blasrad
- 32a-f: weitere Transport- und/ oder Behandlungseinrichtungen
- 40: Lagerscheibe
- 41: drehbares Wälzlager
- 42: Linearlager
- 43: Drehachse
- 50: Shuttle
- 51: Läufer
- 52: Stator, Führungsbahn
- 53: Dorn
- 54: Steuerung
- 55: Antrieb
- Fₓ: Kraft in X-Richtung
- F_{y}: Kraft in Y-Richtung
- F_{R}: Resultierende Kraft
- L: Längsachse des Behältnisses

## Patentansprüche

1. Fördervorrichtung (1) zum Fördern von Behältnissen (10), insbesondere Vorformlingen (10), umfassend
mindestens eine auf einer Bahn, insbesondere einer Kurvenbahn, bewegbare Transporteinheit (4, 50) zum Transportieren von mindestens einem Behältnis (10), die zumindest mittelbar mit einer Antriebseinheit verbunden ist und die eine auf der Bahn bewegbare Transportkomponente (6, 51) und eine Aufnahmeeinrichtung (8, 53) zum Aufnehmen von dem mindestens einem Behältnis (10) aufweist,
**dadurch gekennzeichnet, dass**
die Aufnahmeeinrichtung (8, 53) zum Ausrichten des Behältnisses (10) zumindest mittelbar und zumindest zeitweise in Bezug auf mindestens eine beim Bewegen der Transporteinheit (4, 50) auf die Aufnahmeeinrichtung (8, 53) und/oder das Behältnis in Folge der Bewegung (10) einwirkenden Kraft ausgerichtet ist.

2. Fördervorrichtung nach Anspruch 1,
**dadurch gekennzeichnet, dass**
die Kraft die Zentrifugalkraft und/oder eine Beschleunigungskraft ist.

3. Fördervorrichtung nach Anspruch 1 oder 2,
**dadurch gekennzeichnet, dass**
die Aufnahmeeinrichtung (8, 53) um mindestens eine erste Achse (13) schwenkbar ist.

4. Fördervorrichtung nach Anspruch 3,
**dadurch gekennzeichnet, dass**
die Aufnahmeeinrichtung (8, 53) um eine zweite Achse schwenkbar ist.

5. Fördervorrichtung nach Anspruch 1,
**dadurch gekennzeichnet, dass**
der Vorformling (10) während des Transports zumindest zeitweise lediglich mit einer Kraft in seiner Körperlängsrichtung beaufschlagbar ist.

6. Fördervorrichtung nach Anspruch 1,
**dadurch gekennzeichnet, dass**
die Ausrichtung der Aufnahmeeinrichtung (8, 53) selbsttätig durchführbar ist.

7. Fördervorrichtung nach Anspruch 1,
**dadurch gekennzeichnet, dass**
die Ausrichtung der Aufnahmeeinrichtung (8, 53) mittels einer Ausrichteinrichtung (14, 16) durchführbar ist.

8. Fördervorrichtung nach Anspruch 7,
**dadurch gekennzeichnet, dass**
die Ausrichteinrichtung (14) mindestens einen Servomotor umfasst, der mit der Transportkomponente (6) und der Aufnahmeeinrichtung (8, 53) in Kontakt steht.

9. Fördervorrichtung nach Anspruch 7,
**dadurch gekennzeichnet, dass**
die Ausrichteinrichtung (16) zumindest abschnittsweise als eine Steuerkurve (16) ausgebildet ist

10. Fördervorrichtung nach Anspruch 1,
**dadurch gekennzeichnet, dass**
die Ausrichtung der Aufnahmeeinrichtung (8, 53) abschnittsweise selbsttätig und abschnittsweise geführt durchführbar ist.

11. Fördervorrichtung nach Anspruch 1,
**dadurch gekennzeichnet, dass**
die Fördervorrichtung (1) ein Transportstem ist.

12. Fördervorrichtung nach Anspruch 1,
**dadurch gekennzeichnet, dass**
die Fördervorrichtung (1) ein Blasrad ist.

13. Fördervorrichtung nach Anspruch 1,
**dadurch gekennzeichnet, dass**
die Fördervorrichtung (1) ein Shuttlesystem (50, 52) ist.

14. Fördervorrichtung nach Anspruch 1,
dadurch gekenntzeichnet, dass
die Körper der Vorformlinge quer zu ihrer Längsachse deformierbar sind.

15. Verfahren zum Fördern von Vorformlingen (10), mit den Schritten
Bewegen einer Transporteinheit (4, 50) zum Transportieren von mindestens einem Vorformling (10) auf mindestens einer Bahn, insbesondere einer Kurvenbahn, die zumindest mittelbar mit einer Antriebseinheit verbunden ist und die eine auf der Bahn bewegbare Transportkomponente (6) und eine Aufnahmeeinrichtung (8, 53) zum Aufnehmen von dem mindestens einem Vorformling (10) aufweist,
Ausrichten des Vorformlings (10) mit der Aufnahmeeinrichtung (8, 53), wobei die Aufnahmeeinrichtung (8, 53) zumindest mittelbar in Abhängigkeit von mindestens einer beim Bewegen der Transporteinheit auf die Aufnahmeeinrichtung (8, 53) und/oder den Vorformling (10) einwirkenden Kraft bewegt wird.

## Claims

1. Transport device (1) for transporting containers (10), in particular preforms (10), comprising at least one transport unit (4, 50) mobile on a track, in particular a curved track, for transporting at least one container (10) which is connected at least indirectly with a drive unit and which has a transport component (6, 51) mobile on the track and a receiver device (8, 53) to receive at least one container (10), **characterised in that** the receiver device (8, 53), for alignment of the container (10), at least indirectly and for at least part of the time is aligned in relation to at least one force exerted on movement of the transport unit (4, 50) on the receiver device (8, 53) and/or the container (10) as a result of the movement.

2. Transport device according to claim 1, **characterised in that** the force is centrifugal force and/or an acceleration force.

3. Transport device according to claim 1 or 2, **characterised in that** the receiver device (8, 53) can be swivelled about at least one first axis (13).

4. Transport device according to claim 3, **characterised in that** the receiver device (8, 53) can be swivelled about a second axis.

5. Transport device according to claim 1, **characterised in that** the preform (10) during transport can for at least part of the time be subjected to just one force in the body longitudinal direction.

6. Transport device according to claim 1, **characterised in that** the alignment of the receiver device (8, 53) can be performed automatically.

7. Transport device according to claim 1, **characterised in that** the alignment of the receiver device (8, 53) can be carried out by means of an alignment device (14, 16).

8. Transport device according to claim 7, **characterised in that** the alignment device (14) comprises at least one servo motor which is contact with the transport component (6) and the receiver device (8, 53).

9. Transport device according to claim 7, **characterised in that** the alignment device (16) is formed at least in sections as a control curve (16).

10. Transport device according to claim 1, **characterised in that** the alignment of the receiver device (8, 53) can be carried out automatically in sections and guided in sections.

11. Transport device according to claim 1, **characterised in that** the transport device (1) is a transport star.

12. Transport device according to claim 1, **characterised in that** the transport device (1) is a blow wheel.

13. Transport device according to claim 1, **characterised in that** the transport device (1) is a shuttle system (50, 52).

14. Transport device according to claim 1, **characterised in that** the body of the preform is deformable transverse to its longitudinal axis.

15. Method for transporting preforms (10) with the steps of moving a transport unit (4, 50) for transporting at least one preform (10) on at least one track, in particular a curved track, which is connected at least indirectly with the drive unit and which has a transport component (6) mobile on the track and a receiver unit (8, 53) to receive at least one preform (10), alignment of the preform (10) with the receiver device (8, 53) wherein the receiver device (8, 53) is moved at least indirectly as a function of at least one force acting on movement of the transport unit on the receiver device (8, 53) and/or the preform (10).

## Revendications

1. Dispositif de transport (1) destiné au transport de récipients (10), en particulier de préformes (10), comprenant
au moins une unité de transport (4, 50) destinée au transport d'au moins un récipient (10) et déplaçable sur une piste, en particulier une piste sinueuse, laquelle est au moins indirectement reliée à une unité d'entraînement et comporte un composant de transport (6, 51) déplaçable sur la piste et un dispositif de réception (8, 53) pour la réception d'au moins un récipient (10),
**caractérisé**
**en ce que** le dispositif de réception (8, 53) est prévu pour orienter le récipient (10) au moins indirectement et au moins temporairement en fonction d'au moins une force agissant, en conséquence du déplacement (10), sur le dispositif de réception (8, 53) et/ou le récipient lors du déplacement de l'unité de transport (4, 50).

2. Dispositif de transport selon la revendication 1,
**caractérisé**
**en ce que** la force est la force centrifuge et/ou une force d'accélération.

3. Dispositif de transport selon la revendication 1 ou la revendication 2,
**caractérisé**
**en ce que** le dispositif de réception (8, 53) est pivotable autour d'au moins un premier axe (13).

4. Dispositif de transport selon la revendication 3,
**caractérisé**
**en ce que** le dispositif de réception (8, 53) est pivotable autour d'un deuxième axe.

5. Dispositif de transport selon la revendication 1,
**caractérisé**
**en ce que** la préforme (10) peut être contrainte au moins temporairement pendant le transport, exclusivement par une force dans sa direction de corps longitudinale.

6. Dispositif de transport selon la revendication 1,
**caractérisé**
**en ce que** l'orientation du dispositif de réception (8, 53) peut être effectuée automatiquement.

7. Dispositif de transport selon la revendication 1,
**caractérisé**
**en ce que** l'orientation du dispositif de réception (8, 53) peut être effectuée au moyen d'un dispositif d'orientation (14, 16).

8. Dispositif de transport selon la revendication 7,
**caractérisé**
**en ce que** le dispositif d'orientation (14) comprend au moins un servomoteur en contact avec le composant de transport (6) et le dispositif de réception (8, 53).

9. Dispositif de transport selon la revendication 7,
**caractérisé**
**en ce que** le dispositif d'orientation (16) est au moins partiellement réalisé sous forme de came de commande (16).

10. Dispositif de transport selon la revendication 1,
**caractérisé**
**en ce que** l'orientation du dispositif de réception (8, 53) peut être effectuée en partie automatiquement et en partie de manière commandée.

11. Dispositif de transport selon la revendication 1,
**caractérisé**
**en ce que** ledit dispositif de transport (1) est une étoile de transport.

12. Dispositif de transport selon la revendication 1,
**caractérisé**
**en ce que** ledit dispositif de transport (1) est une roue de soufflage.

13. Dispositif de transport selon la revendication 1,
**caractérisé**
**en ce que** ledit dispositif de transport (1) est un système de navette (50,52).

14. Dispositif de transport selon la revendication 1,
**caractérisé**
**en ce que** les corps des préformes sont déformables transversalement à leur axe longitudinal.

15. Procédé de transport de préformes (10), comprenant les étapes suivantes :
déplacement d'une unité de transport (4, 50) destinée au transport d'au moins une préforme (10) sur au moins une piste, en particulier une piste sinueuse, laquelle est au moins indirectement reliée à une unité d'entraînement et comporte un composant de transport (6) déplaçable sur la piste et un dispositif de réception (8, 53) pour la réception d'au moins une préforme (10),
orientation de la préforme (10) par le dispositif de réception (8, 53), ledit dispositif de réception (8, 53) étant déplacé au moins indirectement en fonction d'au moins une force agissant sur le dispositif de réception (8, 53) et/ou la préforme (10) lors du déplacement de l'unité de transport.
